# EUROPEAN PATENT APPLICATION

(11) **EP 3 982 317 A1**
(43) Date of publication of application: **13.04.2022**
(21) Application number: 19951039.7
(22) Date of filing: 02.11.2019
(51) Int. Cl.: G06Q 20/12, G06Q 30/08, A63F 13/792

(54) **GAME ACCOUNT VALUATION METHOD AND SYSTEM**

(71) Applicant: Gamania Digital Entertainment Co., Ltd., 11494 Taipei City (TW)
(72) Inventor: CHIEN, Chih-Hao, Taipei City, Taiwan 11494 (CN); WANG, Cheng-Yu, Taipei City, Taiwan 11494 (CN); WU, Wan-Chen, Taipei City, Taiwan 11494 (CN)
(74) Representative: karo IP
(86) International application number: PCT/CN2019/115186
(87) International publication number: WO 2021/082020

(57) **Abstract**

The present invention is publish a method and system for game account valuation, through the establishment of a game account trading platform, provide different game accounts for valuation, acquisition and consignment, seller users can choose a suitable plan according to their personal needs, and through the management of the game account trading platform, increase the credibility and security of transaction information, and also can reduce the impact on the value of game data.

## Description

### FIELD OF THE INVENTION

The present invention relates generally to a method and system for game account valuation, and more particularly to a method and system that can provide for valuation, acquisition, and consignment of different game accounts.

### BACKGROUND OF INVENYION

In recent years, entertainment activities are one of the ways for pressure release and physical and mental relaxation for modern people. Among the entertainment activities, game applications that allow interaction between users, audio and visual enjoyment as well as social exchange are most favored by the users. Meanwhile, thanks to functional improvement and popularization of smart devices, apart from computer games, mobile games are rapidly growing. Along with the promotion of international e-sports competitions by countries from all over the world, the game industry and game applications have become part of daily life.

Generally, users can have multiple accounts to play multiple games. Users can select specific games to play according to their preferences and available time. The game results, such as game objects need investment and operation by the users. After a period of time, users may have multiple dispersed game accounts having various asset values.

Currently, users can sell their own game accounts to other users. However, for the time being, there is no system for valuation of game accounts. Users normally need to estimate the value of their game accounts by themselves. Moreover, there are no public platforms for game account trading. Game account sellers need to manage the whole selling procedure, and must pay attention to the updated information of the buyers at all times. For the game account sellers, the whole selling procedure is quite complicated and tedious. The whole game account transaction procedure is quite opaque and risky for both the buyer and the seller.

### SUMMARY OF THE INVENTION

The object of the present invention is to provide a method and system for game account valuation, so that the game account can be automatically valuated according to the transaction records on the platform, and at the same time, acquisition or consignment procedures can be carried out. In this way, valuation and transaction operations of game accounts can be more efficient and convenient.

The game account valuation method provided by the present invention includes: a) a game account trading platform is provided by a server, wherein, the game account trading platform is connected to multiple game interfaces. When any primary account registers the game account trading platform, the primary account will bind multiple game accounts of the same user of those game interfaces; b) the game account trading platform has a valuation interface. A seller user primary account selects any game account to be valuated and registers the game account on the valuation interface, wherein the game account contains multiple game objects; and, c) those game objects are compared, and a close transaction is selected from multiple transaction records of the game account trading platform to provide a corresponding valuation amount for the seller user primary account.

Preferably, the game account trading platform also has an acquisition interface, wherein, step c) includes: c1) when the game account trading platform provides the valuation amount, the seller user primary account can choose whether to agree to acquisition by the game account trading platform at an acquisition price, wherein, the acquisition price is lower than the valuation amount; c2) if so, the game account trading platform pays the acquisition amount and transfers the game account to a platform primary account; and c3) according to the information data of the game account, if in order to meet a predetermined information data as a comparison, the game account is allotted multiple value-added information data, and re-registered on the game account trading platform for sale.

Preferably, the game account trading platform also has a consignment interface, wherein, step c) also includes: c4) when the game account trading platform provides a valuation amount, the seller user primary account can choose whether to entrust the game account trading platform to sell the game account at a desired sales amount; c5) if so, the desired sales amount and the game items are compared to multiple demand records on the game account trading platform, a close demand information data is selected and an auction information is provided to a buyer user primary account; c6) when the buyer user primary account wants to buy, the auction information is selected, and a remittance amount is paid, and a remittance notice is provided to the game account trading platform; and c7) after receiving the remittance notice, the game account trading platform will deduct a procedure amount and send the desires sales amount to the seller user primary account, transfer the game account to be bound to the buyer user primary account, and save a transaction record.

A game account valuation system provided by the present invention comprises: a server and a seller client. The server is provided with multiple game interfaces of a game account trading platform. When any primary account registers the game account trading platform, the primary account will bind multiple game accounts of the same user of those game interfaces. The game interfaces contain a valuation interface. The seller client has a seller user primary account to select any game account to be valuated and to register the game account on the valuation interface, wherein, the game account contains multiple game objects. After comparing those game objects, the game account trading platform will select a close transaction information data from multiple transaction records, to provide a corresponding valuation amount to the seller user primary account.

Preferably, the game account trading platform also has an acquisition interface that provides the seller user primary account with the option to agree to an acquisition by the game account trading platform at an acquisition price, wherein, the acquisition price is lower than the valuation amount.

Preferably, the game account trading platform also has a consignment interface that provides the seller user primary account with the option to entrust the game account trading platform to sell the game account at a desired amount.

Further features and advantages will become apparent from the following and more particular description of the present invention with respect to preferred embodiments, as illustrated in the accompanying drawings.

### BRIEF DESCRIPTION OF THE DRAWINGS

Fig. 1 is a flow chart of the game account valuation method according to the present invention;
Fig. 2 is a flow chart of the game account acquisition method after valuation according to the present invention;
Fig. 3 is a flow chart of the game account consignment method after valuation according to the present invention;
Fig. 4 is a schematic diagram of the service interface of the game account trading platform according to the present invention;
Fig. 5a and Fig.5b are schematic diagrams of the valuation service interface of the present invention;
Fig. 6a and Fig.6b are schematic diagrams of the official acquisition interface of the present invention;
Fig. 7a and Fig.7b are schematic diagrams of the consignment service interface of the present invention;

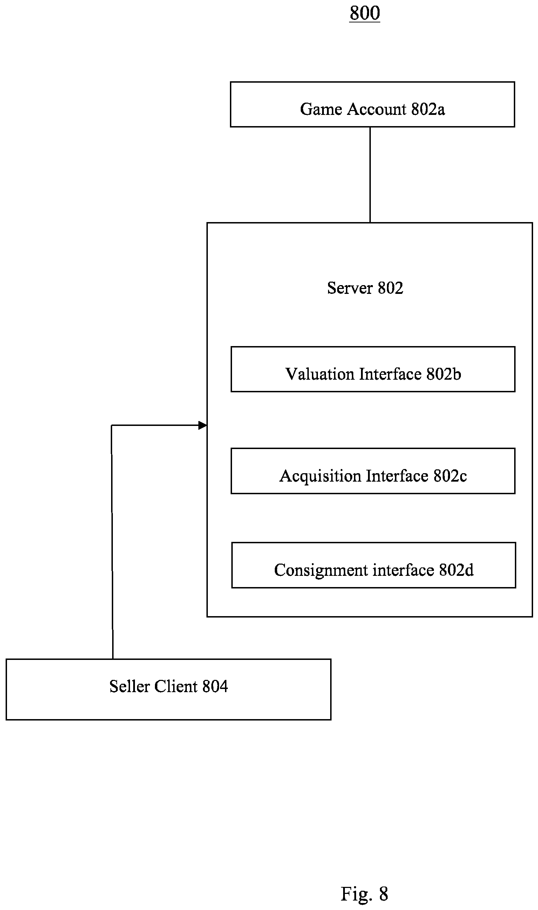

Fig. 8 is an interconnection diagram of the game account valuation system of the present invention.

### DETAILED DESCRIPTION OF THE INVENTION

### Embodiment 1, METHOD FOR GAME ACCOUNT VALUATION

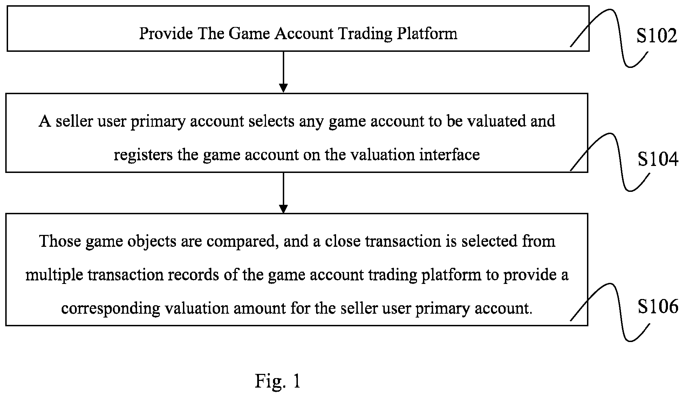

Fig.1 shows a game account valuation method of the present invention. First of all, in Step S102, a server provides a game account trading platform that can be connected to multiple game interfaces. When any primary account registers the game account trading platform, the primary account can bind multiple game accounts of the same user in those game interfaces.

The game account trading platform has a valuation interface. In Step S104, a seller user primary account selects any game account to be valuated, and registers the game account on the valuation interface, wherein, the game account contains multiple game objects.

In one embodiment, those game objects are selected from game level, progress, ranking, or any modifiable information data of the game account, wherein, Step S104 also includes: the game account trading platform further locks the game account to prohibit change of those non-modifiable information data to be transacted.

In another embodiment, those game objects are selected from game level, progress, rankings, or any modifiable information data of the game account, wherein, Step S104 also includes: when the game account trading platform has not received the remittance notice, a cycle time is set to update the modifiable information data of the auction information.

Thereafter, in Step S106, those game objects are compared to multiple transaction records on the game account trading platform, and a close transaction information data is selected to provide a corresponding valuation amount to the seller user primary account.

### Embodiment 2, the game account trading platform has an acquisition interface

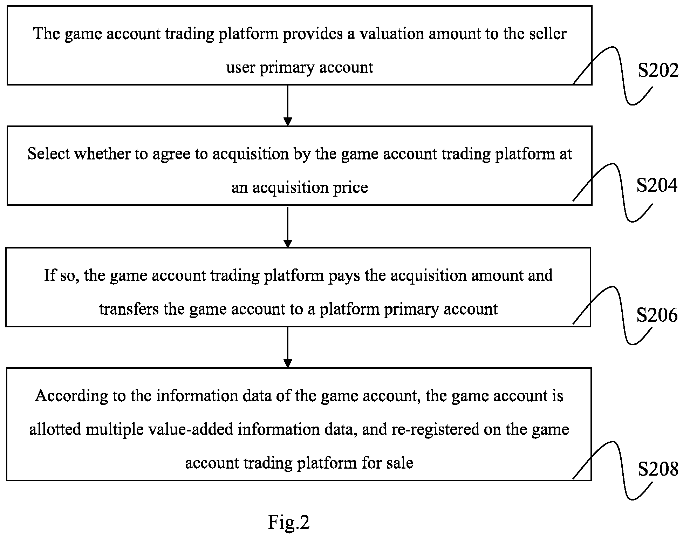

Preferably, the game account trading platform also has an acquisition interface. Referring to the Fig. 2, a process of the game account acquisition method after valuation is depicted. In Step S202,, the game account trading platform provides the valuation amount to the seller user primary account; In Step S204, the seller user primary account can choose whether to agree to the acquisition of the game account by the game account trading platform at an acquisition price, wherein, the acquisition price can be lower than the valuation amount; then, in Step S206, if the seller user primary account agrees to the acquisition by the game account trading platform, the game account trading platform pays the acquisition price and transfers the game account to a platform primary account; In addition, in Step S208, according to the information data of the game account, if in order to meet a predetermined information data as a comparison, the game account is allotted multiple value-added information data, and re-registered on the game account trading platform for sale. In one embodiment, those value-added information data are acquired from the for-sale information data on the game account trading platform. If those information data are insufficient to meet the predetermined information data, the game account will be preferentially retained with the platform primary account.

### Embodiment 3, the game account trading platform has an assignment interface

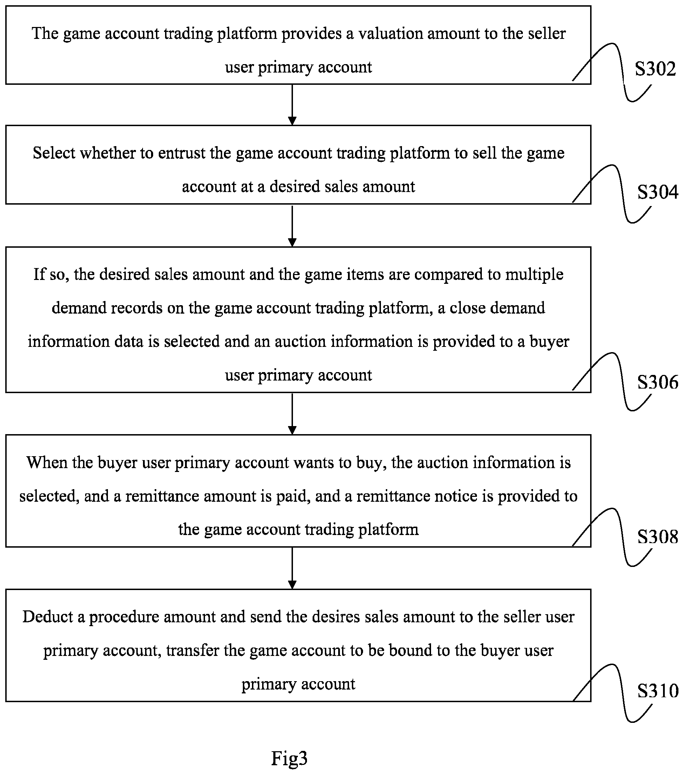

Preferably, the game account trading platform also has an assignment interface. Referring to the Fig. 3, a process of the game account consignment method after valuation is depicted. In Step S302, the game account trading platform provides a valuation amount to the seller user primary account; in Step S304, the seller user primary account can choose whether to entrust the game account trading platform to sell the game account at a desired price; then, in Step S306,, if the seller user primary account chooses to entrust the game account trading platform to sell the game account, the desired price and those game items are compared to multiple demand records on the game account trading platform, and a close demand information data is selected and an auction information is provided to at least one buyer user primary account. In Step S308, when the buyer user primary account wants to buy, the auction information is selected and a remittance amount is paid, and a remittance notice is provided to the game account trading platform. In Step S310, after receiving the remittance notice, the game account trading platform will deduct a procedure amount, send the desired amount to the seller user primary account, transfer the game account to be bound to the buyer primary account, and save a transaction record.

In one embodiment, the valuation amount, the acquisition amount, and the desired sales amount are paid through financial payment or credit payment.

### Embodiment 4, the implementation of the above game account valuation method

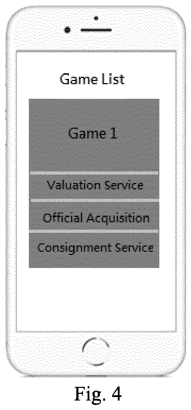

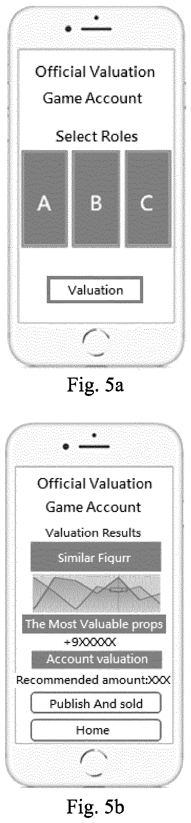

Referring to Fig. 4 to Fig. 5, the implementation of the above game account valuation method is depicted. When the player wants to sell the game account, the player will firstly log on to the game account trading platform. As shown in Fig. 4, the player can select the service interface for selling, which includes valuation service, official acquisition and consignment service. When the player chooses the valuation service, as shown in Fig. 5a, the game account trading platform displays a valuation interface for the player to select the role combination in the game to be valuated. After clicking the valuation key, as shown in Fig. 5b, the game account trading platform further calculates the valuation results, displays the amount of previous similar transactions and the most valuable props, and provides a recommended sales amount. Interested parties can directly click on the buykey.

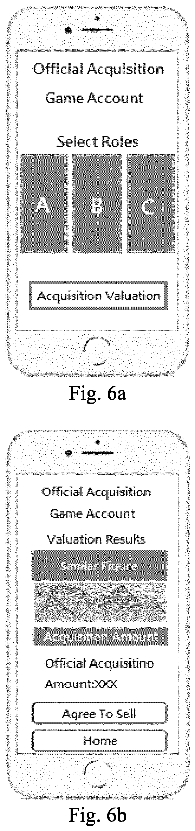

When the player chooses official acquisition, as shown in Fig. 6a, the game account trading platform displays the valuation interface, for the player to select the role combination to be valuated in the game. After clicking on the acquisition valuation key, as shown in Fig. 6b, the game account trading platform will further calculate the valuation results, and display the amount of similar previous transactions of such a role combination as well as the official acquisition price. If interested, the seller can select the agree to sell key.

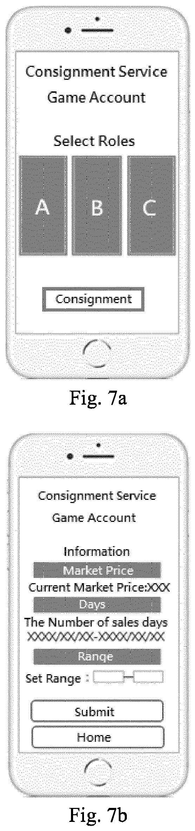

When the player chooses the consignment service, as shown in Fig. 7a, the game account trading platform displays the valuation interface, for the player to select the role in the game to be valuated. When the player clicks the consignment key, as shown in Fig. 7b, the game account trading platform will further calculate the current market price to sell the game account, and display the number of sales days for the consignment service. The player can input a range for the transaction price. After confirmation, click the submit key.

The method of the present invention, or a specific type or a portion thereof, may exist in the form of programming codes. The programming codes may be contained in a physical medium, such as a floppy disk, a compact disc, a hard disk, or any other machine-readable (e.g., computerreadable) storage media, or any computer program products with no limit to external forms. When the programming codes are loaded and executed by a machine (e.g., a computer), the machine becomes a device participating in the implementation of the present invention. The programming codes can also be transmitted through some transmission media, such as wires or cables, optical fibers, or any transmission type, wherein, when the programming codes are received, loaded and executed by a machine (e.g., a computer), the machine becomes a device participating in the implementation of the present invention. When operating in a general purpose processing unit, the programming codes combined with the processing unit provide a unique device that operates similar to the application of a particular logic circuit.

### Embodiment 5, the connections of a game account valuation system

Fig. 4 shows the connections of a game account valuation system of the present invention. System 800 includes: a server 802 and a seller client 804, wherein, the seller client 804 can be connected to the server 802, and the server 802 can be connected to at least one game account 802 a.

The server 802 loads a game account trading platform to connect multiple game interfaces. When any primary account registers the game account trading platform, the primary account will bind multiple game accounts of the same user in those game interfaces 802a. The server 802 contains a valuation interface 802b; the seller client 804 has a seller user primary account to select any game account 802a to be valuated and to register the game account 802a to the valuation interface 802b, wherein, the game account 802a contains multiple game objects; the game account trading platform compares those game objects to multiple transaction records and a close transaction information data is selected to provide a corresponding valuation amount to the seller user primary account.

Preferably, the game account trading platform also has an acquisition interface 802c, which provides the seller user primary account with the option to agree to acquisition of the game account 802a by the game account trading platform at an acquisition price, wherein, the acquisition price is lower than the valuation amount.

Preferably, the game account trading platform also has a consignment interface 802d, which provides the seller user primary account with the option to entrust the game account trading platform to sell the game account 802a at a desired price.

Although the present invention has been explained in relation to its preferred embodiment, it is to be understood that many other possible modifications and variations can be made without departing from the spirit and scope of the present invention as hereinafter claimed.

## Claims

1. The method for game account valuation, includes:
a) a game account trading platform is provided by a server, the game account trading platform is connected to multiple game interfaces. When any primary account registers the game account trading platform, the primary account will bind multiple game accounts of the same user of those game interfaces;
b) the game account trading platform has a valuation interface. A seller user primary account selects any game account to be valuated and registers the game account on the valuation interface, wherein the game account contains multiple game objects; and
c) those game objects are compared, and a close transaction is selected from multiple transaction records of the game account trading platform to provide a corresponding valuation amount for the seller user primary account.

2. The method for game account valuation of Claim 1, the game account trading platform also has an acquisition interface, wherein, step c) includes:
c1) when the game account trading platform provides the valuation amount, the seller user primary account can choose whether to agree to acquisition by the game account trading platform at an acquisition price, wherein, the acquisition price is lower than the valuation amount;
c2) if so, the game account trading platform pays the acquisition amount and transfers the game account to a platform primary account; and
c3) according to the information data of the game account, if in ordre to meet a predetermined information data as a comparison, the game account is allotted multiple value-added information data, and re-registered on the game account trading platform for sale.

3. The method for game account valuation of Claim 1, the game account trading platform also has a consignment interface, wherein, step c) also includes:
c4) when the game account trading platform provides a valuation amount, the seller user primary account can choose whether to entrust the game account trading platform to sell the game account at a desired sales amount;
c5) if so, the desired sales amount and the game items are compared to multiple demand records on the game account trading platform, a close demand information data is selected and an auction information is provided to a buyer user primary account;
c6) when the buyer user primary account wants to buy, the auction information is selected, and a remittance amount is paid, and a remittance notice is provided to the game account trading platform; and
c7) after receiving the remittance notice, the game account trading platform will deduct a procedure amount and send the desires sales amount to the seller user primary account, transfer the game account to be bound to the buyer user primary account, and save a transaction record.

4. The method for game account valuation of Claim 3, wherein, those game objects are selected from game level, progress, ranking, or any modifiable information data of the game account, wherein, Step b) also includes:
b1) the game account trading platform further locks the game account to prohibit change of those non-modifiable information data to be transacted.

5. The method for game account valuation of Claim 3, wherein, those game objects are selected from game level, progress, rankings, or any modifiable information data of the game account, wherein, Step b) also includes:
b2) when the game account trading platform has not received the remittance notice, a cycle time is set to update the modifiable information data of the auction information.

6. The method for game account valuation of Claim 2 or Claim3, wherein, the valuation amount, the acquisition amount, and the desired sales amount are paid through financial payment or credit payment.

7. The method for game account valuation, includes:
the server loads a game account trading platform to connect multiple game interfaces, when any primary account registers the game account trading platform, the primary account will bind multiple game accounts of the same user in those game interfaces, the server contains a valuation interface, and
the seller client has a seller user primary account to select any game account to be valuated and to register the game account to the valuation interface, wherein, the game account contains multiple game objects, the game account trading platform compares those game objects to multiple transaction records and a close transaction information data is selected to provide a corresponding valuation amount to the seller user primary account.

8. The method for game account valuation of Claim 7, wherein, the game account trading platform also has an acquisition interface, which provides the seller user primary account with the option to agree to acquisition of the game account by the game account trading platform at an acquisition price, wherein, the acquisition price is lower than the valuation amount.

9. The method for game account valuation of Claim 7, wherein, the game account trading platform also has a consignment interface, which provides the seller user primary account with the option to entrust the game account trading platform to sell the game account at desired price.
